# EUROPEAN PATENT APPLICATION

(11) **EP 4 692 618 A1**
(43) Date of publication of application: **11.02.2026**
(21) Application number: 24918857.4
(22) Date of filing: 20.11.2024
(51) Int. Cl.: F16K 31/122, F16K 31/126, F16K 35/14, F16K 37/00, G21C 15/18, G21C 1/32

(54) **MALFUNCTION PREVENTION VALVE AND NUCLEAR EQUIPMENT COMPRISING SAME**

(30) Priority: 19.01.2024 KR 20240008976
(71) Applicant: Korea Atomic Energy Research Institute, Daejeon 34057 (KR)
(72) Inventor: CHANG, Cheongbong, Daejeon 34057 (KR); KIM, Seok, Daejeon 34057 (KR); CHO, Hyunjun, Daejeon 34057 (KR); LEE, Jong Hui, Daejeon 34057 (KR); BAE, Youngmin, Daejeon 34057 (KR)
(74) Representative: BCKIP Part mbB
(86) International application number: PCT/KR2024/018423
(87) International publication number: WO 2025/154929

(57) **Abstract**

A malfunction prevention valve includes: a malfunction prevention valve body in which a malfunction prevention flow path is formed; a malfunction prevention plunger movably disposed in the malfunction prevention valve body to open and close the malfunction prevention flow path; a plunger movement driving plate movably disposed in the malfunction prevention valve body such that one surface of the plunger movement driving plate is connected to the malfunction prevention plunger; and a malfunction prevention elastic member configured to provide an elastic force to the plunger movement driving plate in a direction in which the malfunction prevention plunger opens the malfunction prevention flow path. A force resulting from a difference in pressure between one side of the malfunction prevention flow path and an exterior is provided to the plunger movement driving plate in a direction in which the malfunction prevention plunger closes the malfunction prevention flow path.

## Description

### TECHNICAL FIELD

The present disclosure is an invention regarding a malfunction prevention valve and a nuclear equipment including the same.

### BACKGROUND ART

In some small modular reactors, in order to achieve emergency core cooling without intervention by an operator and without aid of emergency power in case of an accident, a natural circulation method using a valve is adopted. In the emergency core cooling of the natural circulation method using a valve, at the time of an accident, a cooling fluid, such as coolant, circulates between an interior of a reactor and an interior of a containment vessel in which the reactor is disposed.

In the emergency core cooling of the natural circulation method using a valve, a main valve is opened and closed by a working fluid, and when a reset valve is opened, the working fluid is supplied to the main valve, so that the main valve is closed. In addition, when a trip valve is opened, the working fluid is discharged from the main valve, so that the main valve is opened.

Meanwhile, a malfunction prevention valve connected to the main valve may prevent the main valve from being opened even when an operator erroneously operates the trip valve during normal operation of the reactor.

### DESCRIPTION OF INVENTION

### TECHNICAL PROBLEM

Embodiments of the present disclosure, having been invented in the background as described above, are intended to provide a malfunction prevention valve having high reliability in malfunction prevention with a relatively simple configuration, which prevents malfunction in which a main valve for emergency core cooling is opened during normal operation of a reactor, and a nuclear equipment including the same.

### TECHNICAL SOLUTION

In accordance with one aspect of the present disclosure, there is provided a malfunction prevention valve, including: a malfunction prevention valve body in which a malfunction prevention flow path is formed; a malfunction prevention plunger movably disposed in the malfunction prevention valve body to open and close the malfunction prevention flow path; a plunger movement driving plate movably disposed in the malfunction prevention valve body such that one surface of the plunger movement driving plate is connected to the malfunction prevention plunger; and a malfunction prevention elastic member configured to provide an elastic force to the plunger movement driving plate in a direction in which the malfunction prevention plunger opens the malfunction prevention flow path, wherein a force resulting from a difference in pressure between one side of the malfunction prevention flow path and an exterior is provided to the plunger movement driving plate in a direction in which the malfunction prevention plunger closes the malfunction prevention flow path.

Further, a nuclear equipment may include: a reactor; a containment vessel in which the reactor is disposed; a main valve disposed inside the containment vessel so as to be connected to an interior of the reactor, the main valve being configured to be opened and closed so that the interior of the reactor and an interior of the containment vessel are selectively in communication with each other, to be closed when a working fluid is supplied and to be opened when the working fluid is discharged; a reset valve configured to open to allow the working fluid to be supplied to the main valve; a trip valve configured to open to allow the working fluid to be discharged from the main valve; a malfunction prevention valve configured such that, when the reset valve is opened, the working fluid is allowed to flow to the main valve, and when the trip valve is opened, the working fluid is allowed to be discharged from the main valve, and the main valve is not opened when the trip valve is opened while the reactor is in normal operation; and a working fluid passage portion configured to provide a passage such that the working fluid flows between two or more of the main valve, the reset valve, the trip valve, or the malfunction prevention valve, wherein the malfunction prevention valve is configured to be opened and closed according to a difference in pressure between the reactor and the interior of the containment vessel.

### EFFECTS OF INVENTION

According to embodiments of the present disclosure, there is an effect that a malfunction prevention valve, which prevents a malfunction in which a main valve for emergency core cooling is opened during normal operation of a reactor, has a simple configuration and high reliability.

### BRIEF DESCRIPTION OF DRAWINGS

FIG. 1 is a diagram illustrating a nuclear equipment according to a first embodiment of the present disclosure.
FIG. 2 is a diagram illustrating a malfunction prevention valve of the nuclear equipment in FIG. 1.
FIGS. 3 and 4 are diagrams illustrating an operation of the nuclear equipment and the malfunction prevention valve in FIG. 1 during initial operation of the reactor.
FIGS. 5 and 6 are diagrams illustrating an operation of the nuclear equipment and the malfunction prevention valve in FIG. 1 during normal operation of the reactor.
FIGS. 7 and 8 are diagrams illustrating an operation of the nuclear equipment and the malfunction prevention valve in FIG. 1 when a trip valve is unintentionally opened during normal operation of the reactor.
FIGS. 9 and 10 are diagrams illustrating an operation of the nuclear equipment and the malfunction prevention valve in FIG. 1 at the time of an accident of the reactor.
FIGS. 11 to 14 are diagrams illustrating a configuration and an operation of a malfunction prevention valve of a nuclear equipment according to a second embodiment of the present disclosure, in which FIG. 11 illustrates initial operation of a reactor, FIG. 12 illustrates normal operation of the reactor, FIG. 13 illustrates a case in which a trip valve is unintentionally opened during normal operation of the reactor, and FIG. 14 illustrates an operation at the time of an accident of the reactor.
FIGS. 15 to 18 are diagrams illustrating a configuration and an operation of a malfunction prevention valve of a nuclear equipment according to a third embodiment of the present disclosure, in which FIG. 15 illustrates initial operation of a reactor, FIG. 16 illustrates normal operation of the reactor, FIG. 17 illustrates a case in which a trip valve is unintentionally opened during normal operation of the reactor, and FIG. 18 illustrates an operation at the time of an accident of the reactor.
FIGS. 19 to 22 are diagrams illustrating a configuration and an operation of a malfunction prevention valve of a nuclear equipment according to a fourth embodiment of the present disclosure, in which FIG. 19 illustrates initial operation of a reactor, FIG. 20 illustrates normal operation of the reactor, FIG. 21 illustrates a case in which a trip valve is unintentionally opened during normal operation of the reactor, and FIG. 22 illustrates an operation at the time of an accident of the reactor.
FIGS. 23 to 26 are diagrams illustrating a configuration and an operation of a malfunction prevention valve of a nuclear equipment according to a fifth embodiment of the present disclosure, in which FIG. 23 illustrates initial operation of the reactor, FIG. 24 illustrates normal operation of the reactor, FIG. 25 illustrates a case in which a trip valve is unintentionally opened during normal operation of the reactor, and FIG. 26 illustrates an operation at the time of an accident of the reactor.
FIG. 27 illustrates a configuration of a malfunction prevention valve of a nuclear equipment during initial operation of a reactor according to a sixth embodiment of the present disclosure.
FIG. 28 illustrates a configuration of a malfunction prevention valve of a nuclear equipment during initial operation of a reactor according to a seventh embodiment of the present disclosure.

### BEST MODE FOR CARRYING OUT THE INVENTION

Hereinafter, specific embodiments for implementing a spirit of the present disclosure will be described in detail with reference to the drawings.

In describing the present disclosure, detailed descriptions of known configurations or functions may be omitted to clarify the present disclosure.

When an element is referred to as being 'connected' to, 'supported' by, 'supplied' to or 'transferred' to, another element, it should be understood that the element may be directly connected to, supported by, supplied to or transferred to another element, but that other elements may exist in the middle.

The terms used in the present disclosure are only used for describing specific embodiments, and are not intended to limit the present disclosure. Singular expressions include plural expressions unless the context clearly indicates otherwise.

Further, in the present disclosure, it is to be noted that expressions, such as the upper portion, the lower portion, the top surface, bottom surface, side surface, and up-down direction are described based on the illustration of drawings, but may be modified if directions of corresponding objects are changed. For the same reasons, some components are exaggerated, omitted, or schematically illustrated in the accompanying drawings, and the size of each component does not fully reflect the actual size.

Terms including ordinal numbers, such as first and second, may be used for describing various elements, but the corresponding elements are not limited by these terms. These terms are only used for the purpose of distinguishing one element from another element.

In the present specification, it is to be understood that the terms such as "including" are intended to indicate the existence of the certain features, areas, integers, steps, actions, elements, combinations, and/or groups thereof disclosed in the specification, and are not intended to preclude the possibility that one or more other certain features, areas, integers, steps, actions, elements, combinations, and/or groups thereof may exist or may be added.

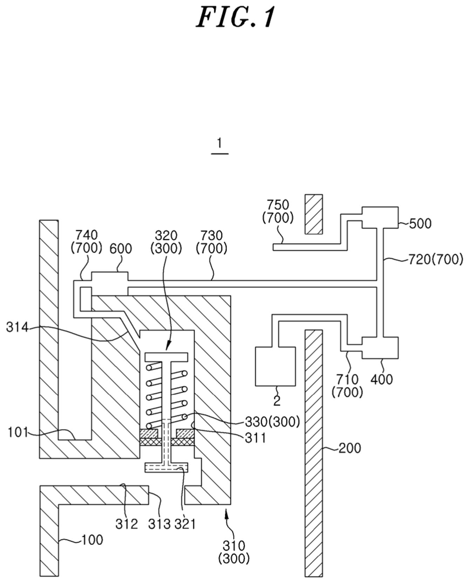

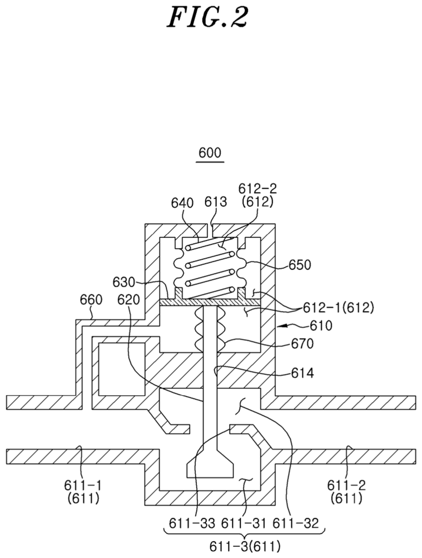

Hereinafter, with reference to FIGS. 1 and 2, a detailed configuration of a malfunction prevention valve and a nuclear equipment including the same according to a first embodiment of the present disclosure will be described. In a nuclear equipment 1 according to the first embodiment of the present disclosure, at the time of an accident of a reactor 100, a cooling fluid, such as a coolant, may be naturally circulated between an interior of the reactor 100 and an interior of a containment vessel 200, so that a core of the reactor 100 may be passively cooled. In addition, even when a trip valve 500 is unintentionally opened during normal operation of the reactor 100, the nuclear equipment 1 may prevent a cooling fluid, such as a coolant, from being circulated between the interior of the reactor 100 and the containment vessel 200. The nuclear equipment 1 according to the first embodiment of the present disclosure may include the reactor 100, the containment vessel 200, a main valve 300, a reset valve 400, the trip valve 500, a malfunction prevention valve 600, and a working fluid passage portion 700.

In the reactor 100, nuclear fission may occur using a nuclear fuel including radioactive material such as uranium. In addition, in the reactor 100, heat generated by the nuclear fission may be used to evaporate water and generate steam. The steam may be supplied to a steam-using destination such as a steam turbine or a desalination apparatus outside the reactor 100. The reactor 100 may be provided with a connection conduit 101 to be connected to the main valve 300.

The containment vessel 200 may be manufactured as a steel containment vessel, and nuclear fission products such as radiation generated by the nuclear fission in the reactor 100 may be prevented from leaking to the outside. The containment vessel 200 may surround the reactor 100. In other words, the reactor 100 may be disposed inside the containment vessel 200.

The main valve 300 may be opened and closed such that the interior of the reactor 100 and the interior of the containment vessel 200 are selectively communicated with each other. The main valve 300 may be disposed on a side or an upper portion of the reactor 100. When the reactor 100 is normally operated, the main valve 300 may be closed, so that the interior of the reactor 100 and the interior of the containment vessel 200 may not be in communication. At the time of an accident of the reactor 100, the main valve 300 disposed on an upper portion of the reactor 100 may be opened, so that a cooling fluid converted into steam in the reactor 100 may be discharged from the reactor 100. The cooling fluid in a vapor state may be discharged from the reactor 100 to the containment vessel 200, and the cooling fluid discharged to the containment vessel 200 may be condensed into a liquid state by an inner wall of the containment vessel 200 or a passive emergency cooling device (not illustrated). The cooling fluid filled in the interior of the containment vessel 200 may be introduced into the interior of the reactor 100 through the main valve 300 disposed on a side of the reactor 100. In other words, the main valve 300 disposed on a side of the reactor 100 may be opened, so that a cooling fluid may be naturally circulated while undergoing a phase change between the interior of the reactor 100 and the interior of the containment vessel 200, and the core of the reactor 100 may be passively cooled.

The main valve 300 may be disposed inside the containment vessel 200 to be connected to the interior of the reactor 100. In addition, the main valve 300 may be configured to be closed when a working fluid is supplied, and to be opened when the working fluid is discharged. The main valve 300 may include a main valve body 310, a main valve plunger 320, and a main valve elastic member 330.

The main valve body 310 may be connected to the interior of the reactor 100 and to the malfunction prevention valve 600. The main valve body 310 may be connected to the interior of the reactor 100 through the connection conduit 101. In addition, the main valve body 310 may be connected to the malfunction prevention valve 600 through a third working fluid flow passage 740, which is included in the working fluid passage portion 700 and will be described later. The main valve body 310 may be connected to a malfunction prevention valve body 610, which will be described later and is included in the malfunction prevention valve 600, through the third working fluid flow passage 740. The main valve body 310 may also be directly connected to the malfunction prevention valve body 610. In the main valve body 310, a main valve plunger movement space 311, a reactor connection flow path 312, a main valve opening and closing hole 313, and a flow passage connection flow path 314 may be formed.

In the main valve plunger movement space 311, the main valve plunger 320 may be movably disposed. The reactor connection flow path 312 may be connected to the interior of the reactor 100 and to the main valve plunger movement space 311. The reactor connection flow path 312 may be connected to the interior of the reactor 100 through the connection conduit 101. The main valve opening and closing hole 313 may be connected to the reactor connection flow path 312. In addition, the main valve opening and closing hole 313 may be in communication with the interior of the containment vessel 200. The main valve opening and closing hole 313 may be opened and closed by the main valve plunger 320. The flow passage connection flow path 314 may be connected to the main valve plunger movement space 311. In addition, the flow passage connection flow path 314 may be connected to the malfunction prevention valve 600. The flow passage connection flow path 314 may be connected to a malfunction prevention flow path 611, which will be described later and is formed in the malfunction prevention valve body 610, through the third working fluid flow passage 740. The flow passage connection flow path 314 may also be directly connected to the malfunction prevention flow path 611.

The main valve plunger 320 may be movably disposed in the main valve body 310 to open and close the main valve opening and closing hole 313. The main valve plunger 320 may be movably disposed in the main valve plunger movement space 311 of the main valve body 310. According to a movement position of the main valve plunger 320 in the main valve plunger movement space 311, the main valve opening and closing hole 313 may be opened and closed by one side of the main valve plunger 320. For example, a lower portion of the main valve plunger 320 may open and close the main valve opening and closing hole 313. The main valve plunger 320 may be formed with a main valve plunger communication flow path 321. Through the main valve plunger communication flow path 321, the reactor connection flow path 312 and the flow passage connection flow path 314 may communicate with each other. In addition, a pressure of the reactor 100 may be delivered to the flow passage connection flow path 314 through the reactor connection flow path 312, the main valve plunger communication flow path 321, and the main valve plunger movement space 311. In other words, a pressure of the flow passage connection flow path 314 may become equal to a pressure of the reactor 100.

The main valve elastic member 330 may elastically support the main valve plunger 320. The main valve elastic member 330 may provide an elastic force to the main valve plunger 320 in a direction in which one side of the main valve plunger 320 opens the main valve opening and closing hole 313.

The reset valve 400 may be opened to supply a working fluid to the main valve 300. By the reset valve 400 being opened and a working fluid being supplied to the main valve 300, the main valve 300 may be closed. The reset valve 400 may be connected to a working fluid supply source 2 by a working fluid supply passage 710, which will be described later and is included in the working fluid passage portion 700. In addition, the reset valve 400 may be connected to a first working fluid flow passage 720, which will be described later and is included in the working fluid passage portion 700. The reset valve 400 may be connected to the main valve 300 through a second working fluid flow passage 730 connected to the first working fluid flow passage 720, the malfunction prevention valve 600 connected to the second working fluid flow passage 730, and the third working fluid flow passage 740 connected to the malfunction prevention valve 600 and the main valve 300. Meanwhile, the working fluid may have the same physical properties as a cooling fluid inside the reactor 100, and the working fluid may be water, and the working fluid supply source 2 may be water stored inside the containment vessel 200. However, the working fluid supply source 2 is not particularly limited.

The reset valve 400 may be configured to be closed when electricity is not applied and to be opened when electricity is applied. For example, the reset valve 400 may include a valve body in which an opening and closing hole is formed, a plunger movably disposed inside the valve body, an elastic member for applying an elastic force to the plunger in a direction to close the opening and closing hole, and a solenoid for applying a driving force to the plunger in a direction to open the opening and closing hole. In addition, when electricity is not applied to the solenoid, the plunger may move by the elastic force of the elastic member to close the opening and closing hole of the valve body. In addition, when electricity is applied to the solenoid, the plunger may overcome the elastic force of the elastic member and move to open the opening and closing hole of the valve body. Opening and closing of the reset valve 400 may be performed by a reset valve controller connected to the solenoid of the reset valve 400. The reset valve controller may be implemented by a computing device including a microprocessor, a memory, and the like, and its implementation method is obvious to those skilled in the art, so a more detailed description thereof will be omitted.

The trip valve 500 may be opened to discharge a working fluid from the main valve 300. By the trip valve 500 being opened and a working fluid being discharged from the main valve 300, the main valve 300 may be opened. The trip valve 500 may be connected to the first working fluid flow passage 720 of the working fluid passage portion 700. In addition, the trip valve 500 may be connected to the main valve 300 through a second working fluid flow passage 730 connected to a first working fluid flow passage 720, the malfunction prevention valve 600 connected to the second working fluid flow passage 730, and the third working fluid flow passage 740 connected to the malfunction prevention valve 600 and the main valve 300. In addition, the trip valve 500 may be connected to an interior of the containment vessel 200 by a fourth working fluid flow passage 750, which will be described later and is included in the working fluid passage portion 700.

The trip valve 500 may be configured to be opened when electricity is not applied and to be closed when electricity is applied. For example, the trip valve 500 may include a valve body in which an opening and closing hole is formed, a plunger movably disposed inside the valve body, an elastic member for applying an elastic force to the plunger in a direction to open the opening and closing hole, and a solenoid for applying a driving force to the plunger in a direction to close the opening and closing hole. In addition, when electricity is not applied to the solenoid, the plunger may move by the elastic force of the elastic member to open the opening and closing hole of the valve body. In addition, when electricity is applied to the solenoid, the plunger may overcome the elastic force of the elastic member and move to close the opening and closing hole of the valve body. Opening and closing of the trip valve 500 may be performed by a trip valve controller connected to the solenoid of the trip valve 500. The trip valve controller may be implemented by a computing device including a microprocessor, a memory, and the like, and since its implementation method is obvious to those skilled in the art, a more detailed description thereof will be omitted.

The malfunction prevention valve 600 may allow a working fluid to flow to the main valve 300 when the reset valve 400 is opened, and may allow the working fluid to be discharged from the main valve 300 when the trip valve 500 is opened. In addition, the malfunction prevention valve 600 may prevent the main valve 300 from being opened when the trip valve 500 is unintentionally opened during normal operation of the reactor 100. The malfunction prevention valve 600 may be connected to the main valve 300, the reset valve 400, and the trip valve 500 through the working fluid passage portion 700. The malfunction prevention valve 600 may be configured to be opened and closed according to a difference in pressure between the reactor 100 and an interior of the containment vessel 200. The malfunction prevention valve 600 may be opened when the difference in pressure between the reactor 100 and the interior of the containment vessel 200 is less than a predetermined pressure difference. In addition, the malfunction prevention valve 600 may be closed when the difference in pressure between the reactor 100 and the interior of the containment vessel 200 is equal to or greater than the predetermined pressure difference. The predetermined pressure difference may be less than the difference in pressure between the reactor 100 and the interior of the containment vessel 200 during normal operation of the reactor 100, and may be greater than a difference in pressure between the working fluid provided to the main valve plunger 320 through the reset valve 400 to close the main valve 300, and the interior of the containment vessel 200. The malfunction prevention valve 600 may include a malfunction prevention valve body 610, a malfunction prevention plunger 620, a plunger movement driving plate 630, a malfunction prevention elastic member 640, a malfunction prevention bellows 650, a malfunction prevention communication passage 660, and a communication prevention bellows 670. The malfunction prevention valve 600 may be configured such that a force based on a difference in pressure between one side of a malfunction prevention flow path 611, which will be described later and is formed in the malfunction prevention valve body 610, and an exterior of the malfunction prevention valve 600, that is, an interior of the containment vessel 200, is provided to the plunger movement driving plate 630 in a direction in which the malfunction prevention plunger 620 closes the malfunction prevention flow path 611.

The malfunction prevention valve body 610 may be disposed inside the containment vessel 200. The malfunction prevention valve body 610 may surround one or more of the malfunction prevention plunger 620, the plunger movement driving plate 630, the malfunction prevention elastic member 640, the malfunction prevention bellows 650, or the communication prevention bellows 670. The malfunction prevention valve body 610 may be connected to the main valve 300 through the third working fluid flow passage 740, and may be connected to the reset valve 400 and the trip valve 500 through the second working fluid flow passage 730 and the first working fluid flow passage 720. The malfunction prevention valve body 610 may be connected to the main valve 300 by being connected to the third working fluid flow passage 740, which is connected to the main valve 300. In addition, the malfunction prevention valve body 610 may be connected to the reset valve 400 and the trip valve 500 by being connected to the second working fluid flow passage 730, which is connected to the reset valve 400 and the trip valve 500 through the first working fluid flow passage 720. The malfunction prevention valve body 610 may also be directly connected to the main valve 300. In the malfunction prevention valve body 610, a malfunction prevention flow path 611, a malfunction prevention space 612, an external communication hole 613, and a plunger through-hole 614 may be formed.

In the malfunction prevention flow path 611, a working fluid may flow in one direction or in the other direction. The malfunction prevention flow path 611 may be opened and closed by the malfunction prevention plunger 620. When the malfunction prevention flow path 611 is opened by the malfunction prevention plunger 620, a working fluid may flow in one direction or the other direction through the malfunction prevention flow path 611. One side of the malfunction prevention flow path 611 may be connected to the main valve 300, and the other side of the malfunction prevention flow path 611 may be connected to the reset valve 400 and the trip valve 500. One side of the malfunction prevention flow path 611 may be connected to the main valve 300 by being connected to the third working fluid flow passage 740 connected to the main valve 300. In addition, the other side of the malfunction prevention flow path 611 may be connected to the reset valve 400 and the trip valve 500 by being connected to the second working fluid flow passage 730, which is connected to the reset valve 400 and the trip valve 500 through the first working fluid flow passage 720. One side of the malfunction prevention flow path 611 may be connected to the flow passage connection flow path 314 of the main valve 300 through the third working fluid flow passage 740. The malfunction prevention flow path 611 may also be integrally formed with the third working fluid flow passage 740 and the second working fluid flow passage 730. In addition, one side of the malfunction prevention flow path 611 may also be directly connected to the flow passage connection flow path 314. The malfunction prevention flow path 611 may include a first connection flow path 611-1, a second connection flow path 611-2, and a malfunction prevention opening and closing space 611-3.

The first connection flow path 611-1 may be connected to the main valve 300. The first connection flow path 611-1 may be connected to the main valve 300 by being connected to the third working fluid flow passage 740 connected to the main valve 300. The first connection flow path 611-1 may be connected to the flow passage connection flow path 314 of the main valve 300. The first connection flow path 611-1 may be connected to the flow passage connection flow path 314 by being connected to the third working fluid flow passage 740 connected to the flow passage connection flow path 314. The first connection flow path 611-1 may also be integrally formed with the third working fluid flow passage 740. In addition, the first connection flow path 611-1 may also be directly connected to the flow passage connection flow path 314. A pressure of the reactor 100 may be delivered to the first connection flow path 611-1 through the flow passage connection flow path 314. In other words, a pressure of the first connection flow path 611-1 may become equal to a pressure of the reactor 100. The first connection flow path 611-1 may be in communication with a first pressure space 612-1, which will be described later and is included in the malfunction prevention space 612. In addition, a pressure of the first connection flow path 611-1 may be delivered to the first pressure space 612-1. In other words, a pressure of the first pressure space 612-1 may become equal to a pressure of the first connection flow path 611-1, and may become equal to a pressure of the reactor 100. The first connection flow path 611-1 may be in communication with the first pressure space 612-1 through the malfunction prevention communication passage 660.

The second connection flow path 611-2 may be connected to the reset valve 400 and the trip valve 500. The second connection flow path 611-2 may be connected to the reset valve 400 and the trip valve 500 by being connected to the second working fluid flow passage 730 that is connected to the reset valve 400 and the trip valve 500 through the first working fluid flow passage 720. The second connection flow path 611-2 may also be integrally formed with the second working fluid flow passage 730.

The malfunction prevention opening and closing space 611-3 may be connected to the first connection flow path 611-1 and the second connection flow path 611-2. In the malfunction prevention opening and closing space 611-3, a portion of the malfunction prevention plunger 620 may be movably disposed. The malfunction prevention opening and closing space 611-3 may include a first opening and closing space 611-31, a second opening and closing space 611-32, and a malfunction prevention opening and closing hole 611-33.

The first opening and closing space 611-31 may be connected to the first connection flow path 611-1. In addition, the second opening and closing space 611-32 may be connected to the second connection flow path 611-2. The second opening and closing space 611-32 may be disposed above the first opening and closing space 611-31, and may be connected to the second connection flow path 611-2. The second opening and closing space 611-32 may be connected to the plunger through-hole 614. In addition, the malfunction prevention plunger 620 may pass through the second opening and closing space 611-32.

The malfunction prevention opening and closing hole 611-33 may be in communication with the first opening and closing space 611-31 and the second opening and closing space 611-32. The first opening and closing space 611-31 may be disposed below the malfunction prevention opening and closing hole 611-33, and the second opening and closing space 611-32 may be disposed above the malfunction prevention opening and closing hole 611-33. The malfunction prevention opening and closing hole 611-33 may be opened and closed by the malfunction prevention plunger 620.

In the malfunction prevention space 612, at least a portion of the plunger movement driving plate 630 or the malfunction prevention plunger 620 may be movably disposed. The malfunction prevention space 612 may include a first pressure space 612-1 and a second pressure space 612-2. The first pressure space 612-1 and the second pressure space 612-2 of the malfunction prevention space 612 may be blocked from communicating with each other by the malfunction prevention bellows 650. The first pressure space 612-1 may be the malfunction prevention space 612 outside the malfunction prevention bellows 650, and the second pressure space 612-2 may be the malfunction prevention space 612 inside the malfunction prevention bellows 650.

The first pressure space 612-1 may be in communication with one side of the malfunction prevention flow path 611. The first pressure space 612-1 may be in communication with one side of the malfunction prevention flow path 611 through the malfunction prevention communication passage 660. The first pressure space 612-1 may be in communication with the first connection flow path 611-1 of the malfunction prevention flow path 611. The first pressure space 612-1 may be in communication with the first connection flow path 611-1 through the malfunction prevention communication passage 660. In addition, a pressure of the first connection flow path 611-1 may be delivered to the first pressure space 612-1 through the malfunction prevention communication passage 660. In other words, a pressure of the first pressure space 612-1 may become equal to a pressure of the first connection flow path 611-1, and may become equal to a pressure of the reactor 100. In the first pressure space 612-1, the communication prevention bellows 670 may be disposed. In addition, in the first pressure space 612-1, the malfunction prevention plunger 620 may be movably disposed such that it passes through the communication prevention bellows 670 and is connected to one surface of the plunger movement driving plate 630.

The second pressure space 612-2 may be in communication with an exterior of the malfunction prevention valve 600. A pressure of the second pressure space 612-2 may become equal to a pressure of the exterior of the malfunction prevention valve 600. In other words, the second pressure space 612-2 may be in communication with an interior of the containment vessel 200 in which the malfunction prevention valve 600 is disposed. In addition, a pressure of the second pressure space 612-2 may become equal to a pressure of the interior of the containment vessel 200 in which the malfunction prevention valve 600 is disposed. The second pressure space 612-2 may be in communication with the interior of the containment vessel 200, which is the exterior of the malfunction prevention valve 600, through the external communication hole 613. In the second pressure space 612-2, the malfunction prevention elastic member 640 may be disposed. In other words, the malfunction prevention elastic member 640 may be disposed inside the malfunction prevention bellows 650

The external communication hole 613 may communicate between the exterior of the malfunction prevention valve 600 and the second pressure space 612-2. In other words, the external communication hole 613 may communicate between the second pressure space 612-2 and the interior of the containment vessel 200, which is the exterior of the malfunction prevention valve 600. Through the external communication hole 613, when a volume of the second pressure space 612-2 changes, a fluid such as water or air may flow into or out of the second pressure space 612-2. In addition, by the external communication hole 613, a pressure of the second pressure space 612-2 may become equal to a pressure of the exterior of the malfunction prevention valve 600. In other words, by the external communication hole 613, a pressure of the second pressure space 612-2 may become equal to a pressure inside the containment vessel 200.

The plunger through-hole 614 may allow the malfunction prevention plunger 620 to movably pass therethrough. The plunger through-hole 614 may be connected to the malfunction prevention space 612 and the malfunction prevention opening and closing space 611-3. The plunger through-hole 614 may be connected to the first pressure space 612-1 and the second opening and closing space 611-32. In addition, the malfunction prevention plunger 620, which is connected to one surface of the plunger movement driving plate 630 and passes through the communication prevention bellows 670, may movably pass through the plunger through-hole 614. In addition, the malfunction prevention plunger 620, having passed through the plunger through-hole 614, may pass through the second opening and closing space 611-32.

The malfunction prevention plunger 620 may be movably disposed in the malfunction prevention valve body 610 so as to open and close the malfunction prevention flow path 611. The malfunction prevention plunger 620 may be connected to one surface of the plunger movement driving plate 630. The malfunction prevention plunger 620 may extend from the plunger movement driving plate 630, and may pass through the communication prevention bellows 670, the plunger through-hole 614, the second opening and closing space 611-32, and the malfunction prevention opening and closing hole 611-33, thereby opening and closing the malfunction prevention opening and closing hole 611-33. In other words, a portion of the malfunction prevention plunger 620 disposed in the first opening and closing space 611-31 may open and close the malfunction prevention opening and closing hole 611-33. For example, the malfunction prevention plunger 620 may have an upper portion connected to a lower surface of the plunger movement driving plate 630, and may extend downward from the lower surface of the plunger movement driving plate 630 and pass through the communication prevention bellows 670, the plunger through-hole 614, the second opening and closing space 611-32, and the malfunction prevention opening and closing hole 611-33. In addition, a lower portion of the malfunction prevention plunger 620 may open and close the malfunction prevention opening and closing hole 611-33 by moving in a vertical direction of the malfunction prevention plunger 620 in the first opening and closing space 611-31 below the malfunction prevention opening and closing hole 611-33.

The plunger movement driving plate 630 may be movably disposed in the malfunction prevention valve body 610 such that one surface thereof is connected to the malfunction prevention plunger 620. For example, a lower surface of the plunger movement driving plate 630 may be connected to the malfunction prevention plunger 620. The plunger movement driving plate 630 may be movably disposed in the malfunction prevention space 612. The other surface of the plunger movement driving plate 630 may be connected to the malfunction prevention bellows 650. In addition, a pressure of the second pressure space 612-2, which is an interior of the malfunction prevention bellows 650, may act on the other surface of the plunger movement driving plate 630. In other words, a pressure of the interior of the containment vessel 200, which is an exterior of the malfunction prevention valve 600, may act on the other surface of the plunger movement driving plate 630. In addition, an elastic force of the malfunction prevention elastic member 640 may act on the other surface of the plunger movement driving plate 630. An elastic force of the malfunction prevention elastic member 640, in a direction in which the malfunction prevention plunger 620 opens the malfunction prevention opening and closing hole 611-33, may act on the other surface of the plunger movement driving plate 630. A pressure of the first pressure space 612-1 may act on one surface of the plunger movement driving plate 630. In other words, a pressure of the reactor 100 may act on one surface of the plunger movement driving plate 630. By a force resulting from a difference in pressure between the first pressure space 612-1 and the second pressure space 612-2 acting on the plunger movement driving plate 630, and an elastic force of the malfunction prevention elastic member 640, the plunger movement driving plate 630 may move in the malfunction prevention space 612. In other words, by a force resulting from a difference in pressure between the reactor 100 and an interior of the containment vessel 200, and an elastic force of the malfunction prevention elastic member 640, the plunger movement driving plate 630 may move in the malfunction prevention space 612. By a movement of the plunger movement driving plate 630, the malfunction prevention plunger 620 may move to open and close the malfunction prevention opening and closing hole 611-33.

For example, the malfunction prevention bellows 650 may be connected to an upper surface of the plunger movement driving plate 630. In addition, a pressure of the second pressure space 612-2, which is an interior of the malfunction prevention bellows 650, may act on the upper surface of the plunger movement driving plate 630. In other words, a pressure of the interior of the containment vessel 200, which is an exterior of the malfunction prevention valve 600, may act on the upper surface of the plunger movement driving plate 630. In addition, an elastic force of the malfunction prevention elastic member 640 may act on the upper surface of the plunger movement driving plate 630. An elastic force of the malfunction prevention elastic member 640, in a downward direction, which is a direction in which the malfunction prevention plunger 620 opens the malfunction prevention opening and closing hole 611-33, may act on the upper surface of the plunger movement driving plate 630. In addition, a pressure of the first pressure space 612-1 may act on the lower surface of the plunger movement driving plate 630. In other words, a pressure of the reactor 100 may act on the lower surface of the plunger movement driving plate 630. By a force resulting from a difference in pressure between the first pressure space 612-1 and the second pressure space 612-2 acting on the plunger movement driving plate 630, and an elastic force of the malfunction prevention elastic member 640, the plunger movement driving plate 630 may move in a vertical direction in the malfunction prevention space 612. In other words, by a force resulting from a difference in pressure between the reactor 100 and an interior of the containment vessel 200, and an elastic force of the malfunction prevention elastic member 640, the plunger movement driving plate 630 may move in a vertical direction in the malfunction prevention space 612. In addition, by a vertical movement of the plunger movement driving plate 630, the malfunction prevention plunger 620 may move in a vertical direction to open and close the malfunction prevention opening and closing hole 611-33. In other words, by a downward movement of the plunger movement driving plate 630, the malfunction prevention plunger 620 may move downward to open the malfunction prevention opening and closing hole 611-33. In addition, by an upward movement of the plunger movement driving plate 630, the malfunction prevention plunger 620 may move upward to close the malfunction prevention opening and closing hole 611-33.

The plunger movement driving plate 630 may partition the first pressure space 612-1 into two spaces of a space contacting one surface of the plunger movement driving plate 630, and a space contacting the other surface thereof. For example, the plunger movement driving plate 630 may partition the first pressure space 612-1 of the malfunction prevention space 612 into a lower space contacting a lower surface of the plunger movement driving plate 630 and an upper space contacting an upper surface thereof.

The malfunction prevention elastic member 640 may provide an elastic force to the plunger movement driving plate 630 in a direction in which the malfunction prevention plunger 620 opens the malfunction prevention flow path 611. The malfunction prevention elastic member 640 may provide an elastic force to the plunger movement driving plate 630 in a direction in which the malfunction prevention plunger 620 opens the malfunction prevention opening and closing hole 611-33 of the malfunction prevention flow path 611. For example, the malfunction prevention elastic member 640 may provide a downward elastic force to the plunger movement driving plate 630. The malfunction prevention elastic member 640 may be disposed in the second pressure space 612-2. In other words, the malfunction prevention elastic member 640 may be disposed inside the malfunction prevention bellows 650.

The malfunction prevention bellows 650 may block communication between the first pressure space 612-1 and the second pressure space 612-2 in the malfunction prevention space 612. The first pressure space 612-1 may be the malfunction prevention space 612 outside the malfunction prevention bellows 650, and the second pressure space 612-2 may be the malfunction prevention space 612 inside the malfunction prevention bellows 650. The malfunction prevention bellows 650 may be disposed in the malfunction prevention space 612 so as to be connected to the malfunction prevention valve body 610 and the other surface of the plunger movement driving plate 630. For example, the malfunction prevention bellows 650 may be disposed in the malfunction prevention space 612 such that an upper portion of the malfunction prevention bellows 650 may be connected to the malfunction prevention valve body 610, and a lower portion thereof may be connected to an upper surface of the plunger movement driving plate 630.

The malfunction prevention communication passage 660 may provide a passage through which the first connection flow path 611-1 and the first pressure space 612-1 communicate with each other. The malfunction prevention communication passage 660 may be connected to the first connection flow path 611-1 and the first pressure space 612-1. By the malfunction prevention communication passage 660, the first connection flow path 611-1 and the first pressure space 612-1 may communicate with each other, and a pressure of the first pressure space 612-1 may become equal to a pressure of the first connection flow path 611-1. In other words, by the malfunction prevention communication passage 660, a pressure of the first pressure space 612-1 may become equal to a pressure of the reactor 100. The malfunction prevention communication passage 660 may be connected to the first connection flow path 611-1 and the first pressure space 612-1.

The communication prevention bellows 670 may prevent communication between the first pressure space 612-1 and the second opening and closing space 611-32, so that a pressure of the first pressure space 612-1 may not become equal to a pressure of the second opening and closing space 611-32. The communication prevention bellows 670 may be disposed in the first pressure space 612-1 so that the malfunction prevention plunger 620 passes through the communication prevention bellows 670 and is connected to one surface of the plunger movement driving plate 630 and the malfunction prevention valve body 610. For example, the communication prevention bellows 670 may be disposed in the first pressure space 612-1 such that the malfunction prevention plunger 620 passes through the communication prevention bellows 670, an upper portion thereof is connected to a lower surface of the plunger movement driving plate 630, and a lower portion thereof is connected to the malfunction prevention valve body 610.

The working fluid passage portion 700 may provide a passage through which a working fluid flows between two or more of the main valve 300, the reset valve 400, the trip valve 500, or the malfunction prevention valve 600. The working fluid passage portion 700 may include a working fluid supply passage 710, a first working fluid flow passage 720, a second working fluid flow passage 730, a third working fluid flow passage 740, and a fourth working fluid flow passage 750.

The working fluid supply passage 710 may provide a passage for a working fluid to flow between a working fluid supply source 2 where the working fluid is stored and the reset valve 400. The working fluid supply passage 710 may be connected to the working fluid supply source 2 and the reset valve 400, and may be a fluid pipe through which a working fluid flows.

The first working fluid flow passage 720 may provide a passage through which a working fluid flows between the reset valve 400 and the trip valve 500. The first working fluid flow passage 720 may be connected to the reset valve 400 and the trip valve 500, and may be a fluid pipe through which a working fluid flows.

The second working fluid flow passage 730 may provide a space through which a working fluid flows between the malfunction prevention valve 600 and the first working fluid flow passage 720. The second working fluid flow passage 730 may be connected to the malfunction prevention valve 600 and the first working fluid flow passage 720, and may be a fluid pipe through which a working fluid flows. The second working fluid flow passage 730 may be connected to the malfunction prevention valve 600 and the first working fluid flow passage 720. The second working fluid flow passage 730 may be connected to the second connection flow path 611-2 of the malfunction prevention valve 600 and the first working fluid flow passage 720.

The third working fluid flow passage 740 may provide a passage through which a working fluid flows between the main valve 300 and the malfunction prevention valve 600. The third working fluid flow passage 740 may be connected to the main valve 300 and the malfunction prevention valve 600, and may be a flow pipe through which the working fluid flows. The third working fluid flow passage 740 may be connected to the main valve 300 and the malfunction prevention valve 600. The third working fluid flow passage 740 may be connected to the flow passage connection flow path 314 of the main valve 300 and the first connection flow path 611-1 of the malfunction prevention valve 600.

The fourth working fluid flow passage 750 may provide a passage through which a working fluid flows between the trip valve 500 and the interior of the containment vessel 200. The fourth working fluid flow passage 750 may be connected to the trip valve 500 and the interior of the containment vessel 200, and may be a flow pipe through which the working fluid flows.

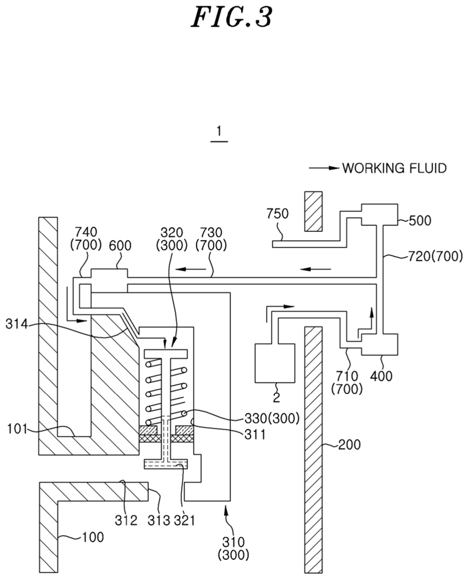

Hereinafter, with reference to FIGS. 3 to 10, an operation and effects of the malfunction valve 600 having the configuration described above, and of the nuclear equipment 1 including the same will be described.

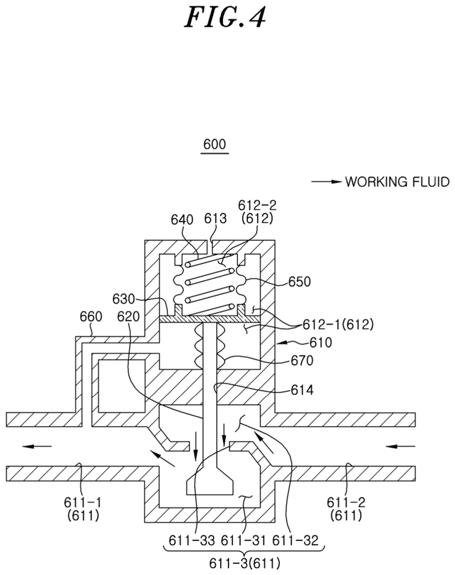

With reference to FIGS. 3 and 4, at an initial operation time of the reactor 100 of the nuclear equipment 1, the reset valve 400 may be opened, the trip valve 500 may be closed, and the malfunction prevention valve 600 may be opened. For example, electricity may be applied to the reset valve 400 via a reset valve controller, so that the reset valve 400 may be opened. In addition, electricity may be applied to the trip valve 500 via a trip valve controller, so that the trip valve 500 may be closed.

By such operations, a working fluid of the working fluid supply source 2 may be supplied to the malfunction prevention valve 600 through the working fluid supply passage 710, the reset valve 400, the first working fluid flow passage 720, and the second working fluid flow passage 730.

Meanwhile, when at the initial time of operation of the reactor 100, a pressure of the reactor 100 may be less than a normal operation pressure, which is a pressure at a normal operation time. Therefore, a difference in pressure between the reactor 100 and the interior of the containment vessel 200 may be less than a predetermined pressure difference. In addition, a difference in pressure between the first pressure space 612-1 and the second pressure space 612-2 of the malfunction prevention valve 600 may also be less than the predetermined pressure difference. The predetermined pressure difference may be less than the difference in pressure between the reactor 100 and interior of the containment vessel 200 during normal operation of the reactor 100, and may be greater than a difference in pressure between the working fluid provided to the main valve plunger 320 through the reset valve 400 to close the main valve 300, and the interior of the containment vessel 200. In addition, a force resulting from a difference in pressure between the first pressure space 612-1 and the second pressure space 612-2 may be less than an elastic force of the malfunction prevention elastic member 640. In addition, a force resulting from a supply pressure of the working fluid may also be less than an elastic force of the malfunction prevention elastic member 640. In addition, the malfunction prevention plunger 620 may maintain a position of opening the malfunction prevention opening and closing hole 611-33 by an elastic force of the malfunction prevention elastic member 640 acting on the plunger movement driving plate 630. For example, the malfunction prevention plunger 620 may maintain a descending position of opening the malfunction prevention opening and closing hole 611-33 by an elastic force of the malfunction prevention elastic member 640 acting on the plunger movement driving plate 630. Therefore, a working fluid supplied to the malfunction prevention valve 600 may pass through the malfunction prevention flow path 611, and may be supplied to the main valve 300 through the third working fluid flow passage 740.

When the working fluid is supplied to the main valve 300, the working fluid may flow through the flow passage connection flow path 314, and a force resulting from a supply pressure of the working fluid may act on the main valve plunger 320. In addition, when the main valve plunger 320 moves to close the main valve opening and closing hole 313 by overcoming an elastic force of the main valve elastic member 330 due to the force of the supply pressure of the working fluid, the main valve 300 may be closed. When the main valve 300 is closed, the reset valve 400 may be closed. For example, the reset valve 400 may be closed by not applying electricity to the reset valve 400 via a reset valve controller.

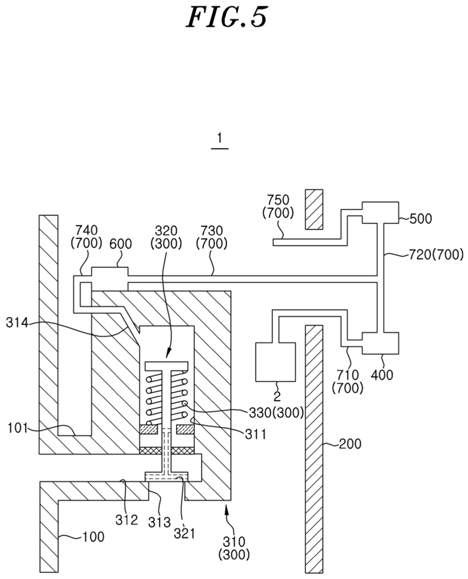

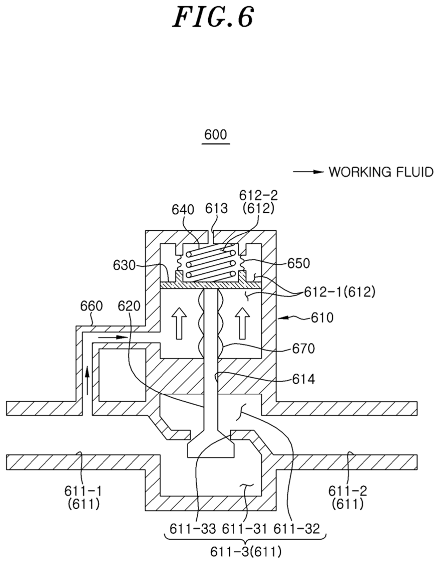

With reference to FIGS. 5 and 6, at a normal operation time of the reactor 100, a pressure of the reactor 100 may be increased up to a normal operation pressure. Therefore, a difference in pressure between the reactor 100 and the interior of the containment vessel 200 may be equal to or greater than a predetermined pressure difference. In addition, a difference in pressure between the first pressure space 612-1 and the second pressure space 612-2 of the malfunction prevention valve 600 may also be equal to or greater than the predetermined pressure difference. In addition, a force resulting from a difference in pressure between the first pressure space 612-1 and the second pressure space 612-2 may be greater than an elastic force of the malfunction prevention elastic member 640. In addition, the malfunction prevention plunger 620 may move and be positioned to close the malfunction prevention opening and closing hole 611-33 by a force resulting from a difference in pressure between the first pressure space 612-1 and the second pressure space 612-2 acting on the plunger movement driving plate 630. For example, the malfunction prevention plunger 620 may move upward and be positioned to close the malfunction prevention opening and closing hole 611-33 by a force resulting from a difference in pressure between the first pressure space 612-1 and the second pressure space 612-2 acting on the plunger movement driving plate 630. In addition, the malfunction prevention elastic member 640 may be compressed by a force resulting from a difference in pressure between the first pressure space 612-1 and the second pressure space 612-2 acting on the plunger movement driving plate 630.

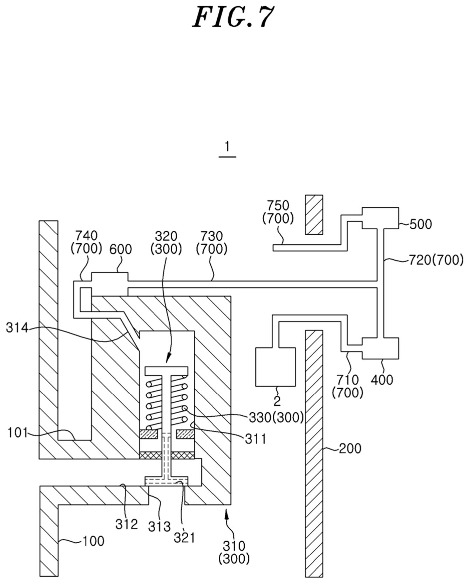

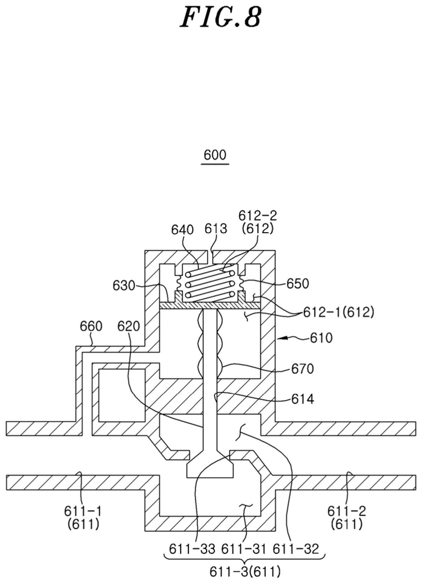

With reference to FIGS. 7 and 8, at a normal operation time of the reactor 100, the trip valve 500 may be unintentionally opened due to an operator's mistake or the like. In other words, during a time when a pressure of the reactor 100 is at a normal operation pressure, the trip valve 500 may be unintentionally opened due to a mistake, etc. by an operator or the like. However, since the reactor 100 is in a normal operation, a pressure of the reactor 100 may be maintained at the normal operation pressure. Therefore, a force resulting from a predetermined pressure difference or more may continuously act on the plunger movement driving plate 630. In addition, the malfunction prevention plunger 620 may maintain a state in which the malfunction prevention opening and closing hole 611-33 is closed by a force resulting from the predetermined pressure difference or more acting on the plunger movement driving plate 630. In addition, even if the trip valve 500 is opened due to an operator's mistake or the like, since the malfunction prevention valve 600 is not opened, the main valve 300 may not be opened. In other words, malfunction may be prevented.

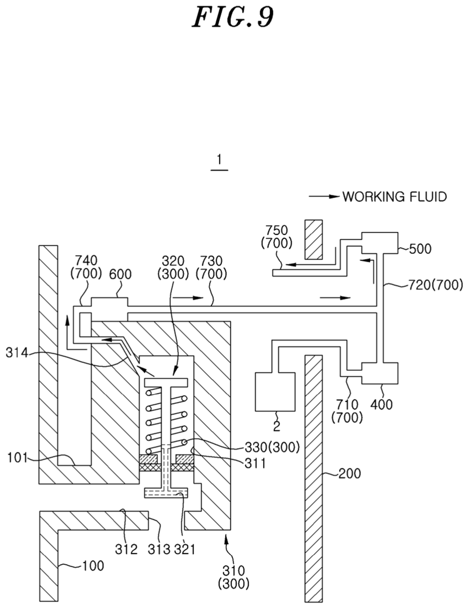

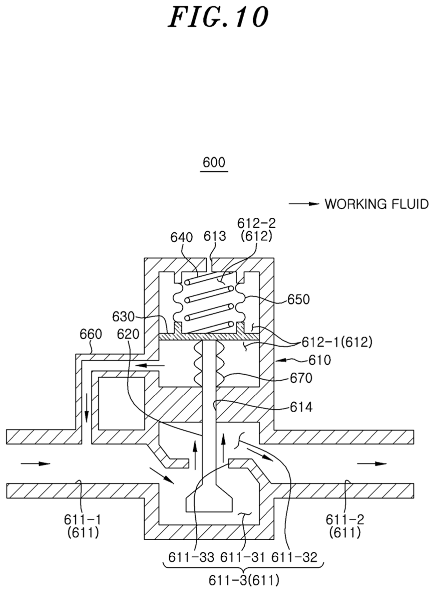

With reference to FIGS. 9 and 10, at the time of an accident of the reactor 100, the trip valve 500 may be opened. For example, the trip valve 500 may be opened by not applying electricity to the trip valve 500 via the trip valve controller.

At the time of an accident of the reactor 100, a pressure of the reactor 100 may be lower than a normal operation pressure. Therefore, a difference in pressure between the reactor 100 and the interior of the containment vessel 200 may be less than a predetermined pressure difference. In addition, a difference in pressure between the first pressure space 612-1 and the second pressure space 612-2 of the malfunction prevention valve 600 may also be less than the predetermined pressure difference. In addition, a force resulting from a difference in pressure between the first pressure space 612-1 and the second pressure space 612-2 may be less than an elastic force of the malfunction prevention elastic member 640. In addition, the malfunction prevention plunger 620 may move to open the malfunction prevention opening and closing hole 611-33 by an elastic force of the malfunction prevention elastic member 640 acting on the plunger movement driving plate 630. For example, the malfunction prevention plunger 620 may move downward to open the malfunction prevention opening and closing hole 611-33 by an elastic force of the malfunction prevention elastic member 640 acting on the plunger movement driving plate 630.

Therefore, a working fluid of the main valve 300 may be discharged from the main valve 300. In other words, a working fluid of the main valve plunger movement space 311 of the main valve 300 may be discharged from the main valve 300 through the flow passage connection flow path 314 of the main valve 300. In addition, the main valve plunger 320 of the main valve 300 may move to open the main valve opening and closing hole 313 by an elastic force of the main valve elastic member 330. In other words, the main valve 300 may be opened. When the main valve 300 is opened, a cooling fluid inside the containment vessel 200 may be recirculated into the reactor 100, so that emergency core cooling may be achieved. The working fluid discharged from the main valve 300 may flow to the trip valve 500 through the third working fluid flow passage 740, the malfunction prevention flow path 611 of the malfunction prevention valve 600, the second working fluid flow passage 730, and the first working fluid flow passage 720. The working fluid having flowed to the trip valve 500 may flow into the interior of the containment vessel 200 through the fourth working fluid flow passage 750.

As described above, in a first embodiment of the malfunction prevention valve 600 and the nuclear equipment 1 including the same, the malfunction prevention valve 600, which prevents a malfunction in which the main valve 300 for emergency core cooling opens during normal operation of the reactor 100, may prevent the malfunction with relatively simple configuration and high reliability.

Meanwhile, in addition to such configuration, according to a second embodiment of the present disclosure, the plunger through-hole 614 may be connected to the first opening and closing space 611-31.

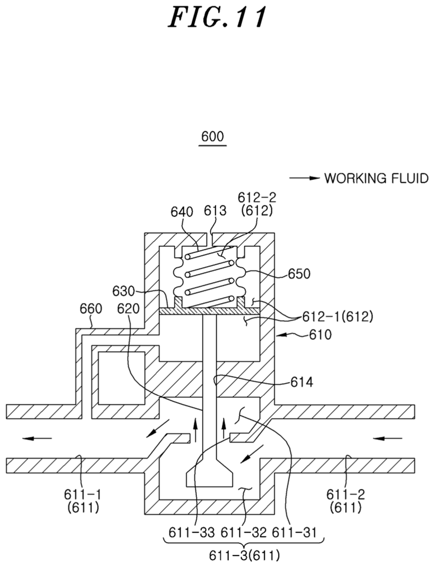

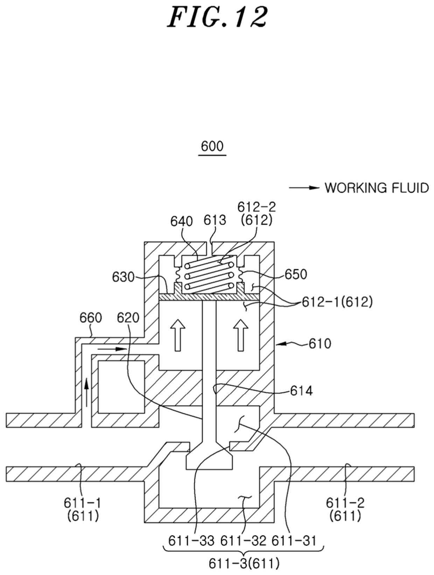

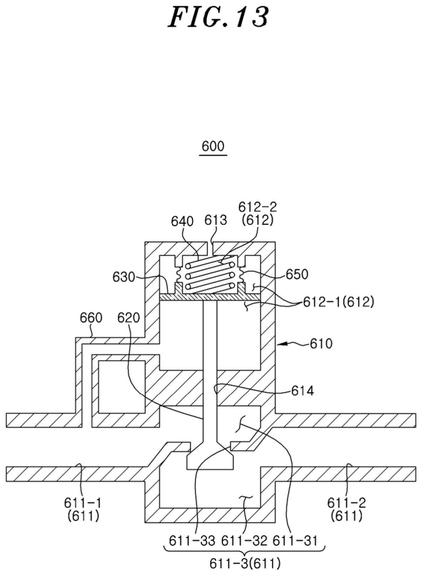

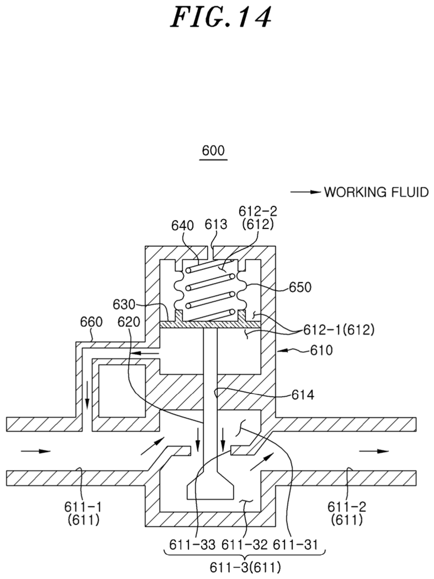

Hereinafter, with reference to FIGS. 11 to 14, the second embodiment will be described. In describing a second embodiment of the present disclosure, when compared with the above-described embodiment, there is a difference in that the plunger through-hole 614 is connected to the first opening and closing space 611-31, and such a difference will be mainly described, and the same descriptions and reference numerals as in the above-described embodiments are incorporated by reference.

With reference to FIGS. 11 to 14, the plunger through-hole 614 may be connected to the first opening and closing space 611-31. In addition, the first opening and closing space 611-31 may be disposed above the second opening and closing space 611-32 and may be connected to the first connection flow path 611-1. In addition, the second opening and closing space 611-32 may be disposed below the malfunction prevention opening and closing hole 611-33, and the first opening and closing space 611-31 may be disposed above the malfunction prevention opening and closing hole 611-33. In addition, the malfunction prevention plunger 620 may pass through the plunger through-hole 614, the first opening and closing space 611-31, and the malfunction prevention opening and closing hole 611-33 to open and close the malfunction prevention opening and closing hole 611-33. In other words, a portion of the malfunction prevention plunger 620 disposed in the second opening and closing space 611-32 may open and close the malfunction prevention opening and closing hole 611-33. For example, a lower portion of the malfunction prevention plunger 620 may open and close the malfunction prevention opening and closing hole 611-33 by vertical movement of the malfunction prevention plunger 620 in the second opening and closing space 611-32 below the malfunction prevention opening and closing hole 611-33.

In such a configuration, the first pressure space 612-1 may not be in communication with the second opening and closing space 611-32. In other words, a pressure of the first pressure space 612-1 may not become equal to a pressure of the second opening and closing space 611-32. Therefore, the communication prevention bellows 670 may not need to be disposed in the first pressure space 612-1 to prevent communication between the first pressure space 612-1 and the second opening and closing space 611-32. In other words, in case of the second embodiment, the communication prevention bellows 670 may not be included.

Meanwhile, in addition to such configuration, according to a third embodiment of the present disclosure, the first pressure space 612-1 is the malfunction prevention space 612 inside the malfunction prevention bellows 650, and the second pressure space 612-2 is the malfunction prevention space 612 outside the malfunction prevention bellows 650, and the plunger through-hole 614 may be connected to the second pressure space 612-2.

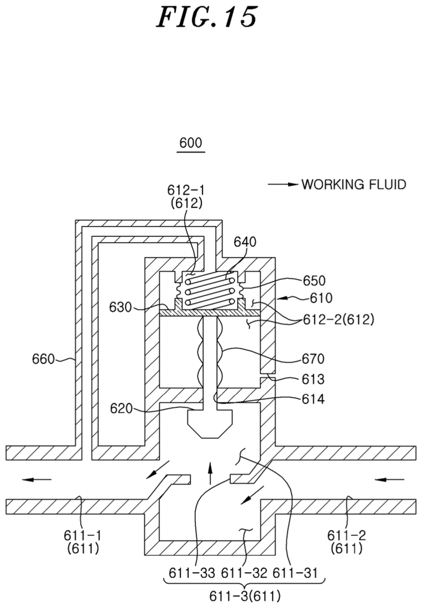

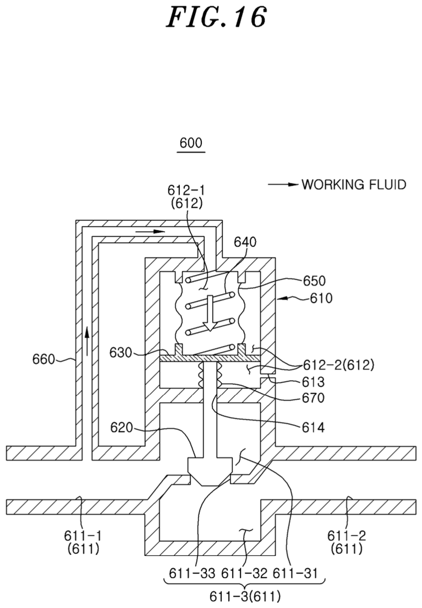

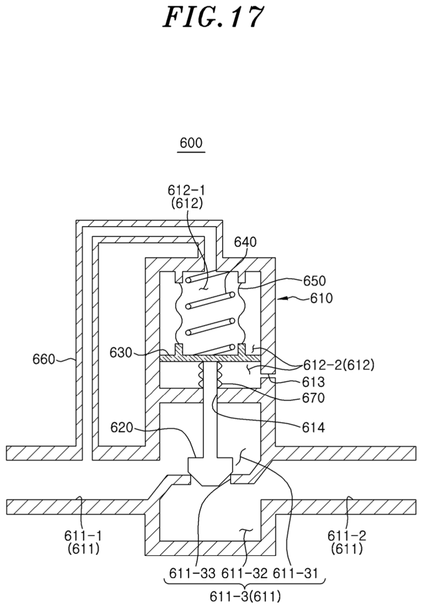

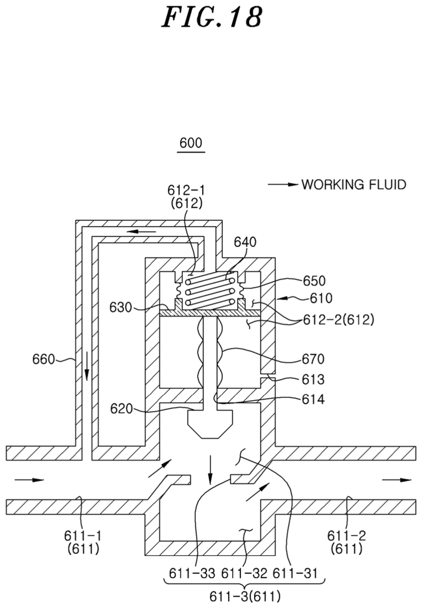

Hereinafter, with reference to FIGS. 15 to 18, the third embodiment will be described. In describing the third embodiment of the present disclosure, when compared with the above-described embodiments, there is a difference in that the first pressure space 612-1 is the malfunction prevention space 612 inside the malfunction prevention bellows 650, the second pressure space 612-2 is the malfunction prevention space 612 outside the malfunction prevention bellows 650, and the plunger through-hole 614 is connected to the second pressure space 612-2, and such a difference will be mainly described, and the same descriptions and reference numerals as in the above-described embodiments are incorporated by reference.

With reference to FIGS. 15 to 18, the first pressure space 612-1 may be the malfunction prevention space 612 inside the malfunction prevention bellows 650, and the second pressure space 612-2 may be the malfunction prevention space 612 outside the malfunction prevention bellows 650.

In addition, the plunger through-hole 614 may be connected to the second pressure space 612-2. In addition, the plunger through-hole 614 may be connected to the first opening and closing space 611-31. In other words, the first opening and closing space 611-31 may be disposed above the second opening and closing space 611-32 and may be connected to the first connection flow path 611-1. In addition, the second opening and closing space 611-32 may be disposed below the malfunction prevention opening and closing hole 611-33, and the first opening and closing space 611-31 may be disposed above the malfunction prevention opening and closing hole 611-33.

In addition, the communication prevention bellows 670 may prevent communication between the second pressure space 612-2 and the first opening and closing space 611-31. The communication prevention bellows 670 may be disposed in the second pressure space 612-2 so that the malfunction prevention plunger 620 passes through the communication prevention bellows 670 and is connected to one surface of the plunger movement driving plate 630 and the malfunction prevention valve body 610.

In addition, the malfunction prevention elastic member 640 may be disposed in the first pressure space 612-1. In other words, the malfunction prevention elastic member 640 may be disposed inside the malfunction prevention bellows 670.

In addition, a portion of the malfunction prevention plunger 620 disposed in the first opening and closing space 611-31 may open and close the malfunction prevention opening and closing hole 611-33. In other words, the malfunction prevention plunger 620 may not pass through the malfunction prevention opening and closing hole 611-33. For example, by a downward movement of the malfunction prevention plunger 620, a lower portion of the malfunction prevention plunger 620 may close the malfunction prevention opening and closing hole 611-33. In addition, by an upward movement of the malfunction prevention plunger 620, the lower portion of the malfunction prevention plunger 620 may open the malfunction prevention opening and closing hole 611-33. In addition, the malfunction prevention elastic member 640 may provide an elastic force to the plunger movement driving plate 630 so that the malfunction prevention plunger 620 moves upward. In other words, the malfunction prevention elastic member 640 may apply an elastic force upward to the plunger movement driving plate 630.

Meanwhile, in addition to such configuration, according to a fourth embodiment of the present disclosure, the malfunction prevention elastic member 640 may be disposed in the second pressure space 612-2.

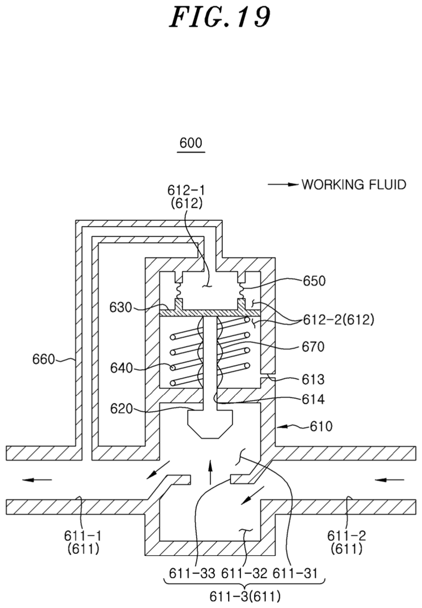

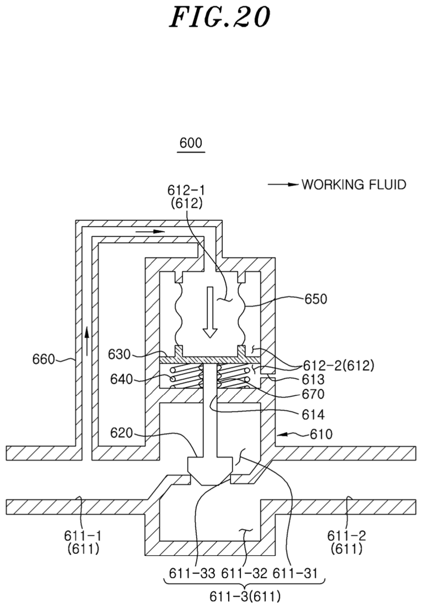

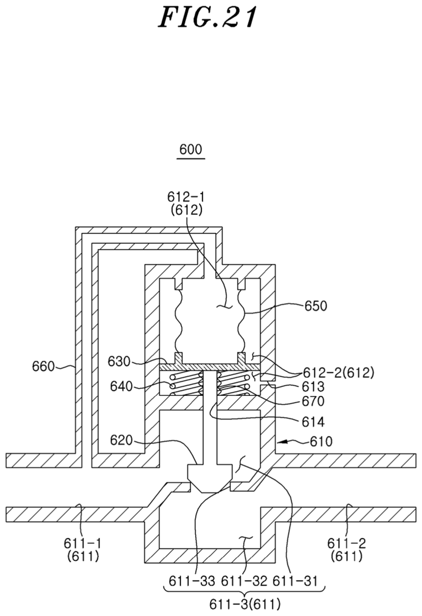

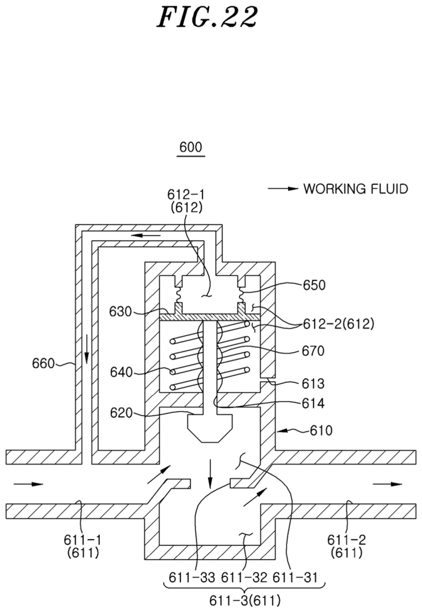

Hereinafter, with reference to FIGS. 19 to 22, the fourth embodiment will be described. In describing the fourth embodiment of the present disclosure, when compared with the above-described embodiments, there is a difference in that the malfunction prevention elastic member 640 is disposed in the second pressure space 612-2, and such a difference will be mainly described, and the same descriptions and reference numerals as in the above-described embodiments are incorporated by reference.

With reference to FIGS. 19 to 22, the malfunction prevention elastic member 640 may be disposed in the second pressure space 612-2. In other words, the malfunction prevention elastic member 640 may be disposed between one surface of the plunger movement driving plate 630 and the malfunction prevention valve body 610 in the malfunction prevention space 612. For example, the malfunction prevention elastic member 640 may be disposed between a lower surface of the plunger movement driving plate 630 and the malfunction prevention valve body 610 in the malfunction prevention space 612.

Meanwhile, in addition to such configuration, according to a fifth embodiment of the present disclosure, a second opening and closing flow path 611-35 may be formed. The second opening and closing flow path 611-35 may be formed in the malfunction prevention opening and closing space 611-3. The second opening and closing flow path 611-35 may be connected to the first connection flow path 611-1, the first opening and closing flow path 611-34, and the second connection flow path 611-2. The second opening and closing flow path 611-35 may be opened and closed by another portion of the malfunction prevention plunger 620.

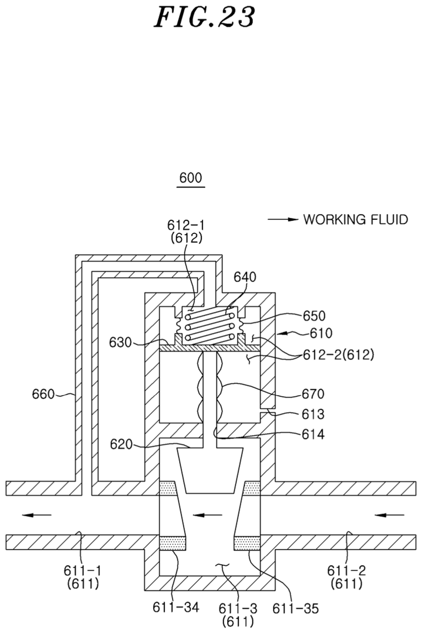

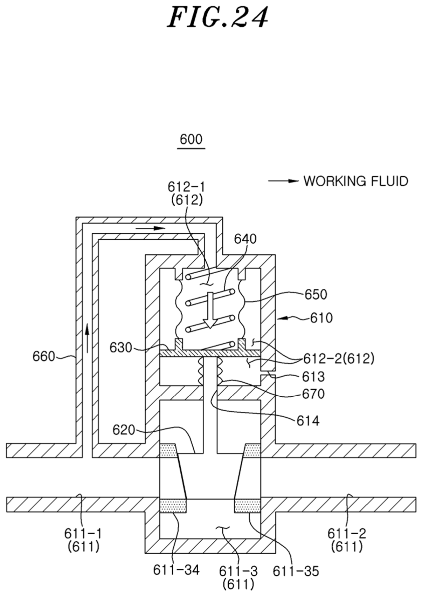

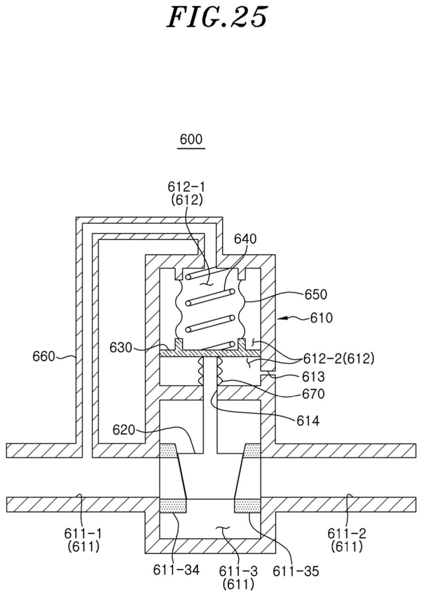

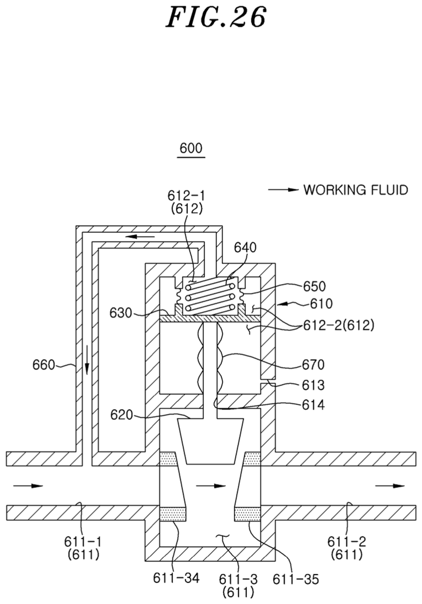

Hereinafter, with reference to FIGS. 23 to 26, a fifth embodiment will be described. In describing the fifth embodiment of the present disclosure, when compared with the above-described embodiments, there is a difference in that in the malfunction prevention opening and closing space 611-3, the first opening and closing flow path 611-34, which is connected to the first connection flow path 611-1 and opened and closed by a portion of the malfunction prevention plunger 620, and the second opening and closing flow path 611-35, which is connected to the second connection flow path 611-2 and opened and closed by another portion of the malfunction prevention plunger 620, are formed, and such a difference will be mainly described, and the same descriptions and reference numerals as in the above-described embodiments are incorporated by reference.

With reference to FIGS. 23 to 26, in the malfunction prevention opening and closing space 611-3, the first opening and closing flow path 611-34, which is connected to the first connection flow path 611-1 and opened and closed by a portion of the malfunction prevention plunger 620, and the second opening and closing flow path 611-35, which is connected to the second connection flow path 611-2 and opened and closed by another portion of the malfunction prevention plunger 620, may be formed.

For example, the first opening and closing flow path 611-34 may be connected to the first connection flow path 611-1 and may extend by a predetermined length toward the malfunction prevention opening and closing space 611-3 in a direction from the first connection flow path 611-1 toward the second connection flow path 611-2. In addition, the second opening and closing flow path 611-35 may be connected to the second connection flow path 611-2 and may extend by a predetermined length toward the malfunction prevention opening and closing space 611-3 in a direction from the second connection flow path 611-2 toward the first connection flow path 611-1. The predetermined length may be shorter than a length of the lower portion of the malfunction prevention plunger 620. In addition, one side of the lower portion of the malfunction prevention plunger 620 may open and close the first opening and closing flow path 611-34, and the other side of the lower portion of the malfunction prevention plunger 620 may open and close the second opening and closing flow path 611-35. In addition, one side and the other side of the lower portion of the malfunction prevention plunger 620 may be inclined in opposite directions. In addition, an opening and closing side of the first opening and closing flow path 611-34 may be inclined in the same direction as one side of the lower portion of the malfunction prevention plunger 620, and an opening and closing side of the second opening and closing flow path 611-35 may be inclined in the same direction as the other side of the lower portion of the malfunction prevention plunger 620.

Meanwhile, in addition to such configuration, according to a sixth embodiment of the present disclosure, a driving plate pressure balancing hole 630-1 may be formed in the plunger movement driving plate 630.

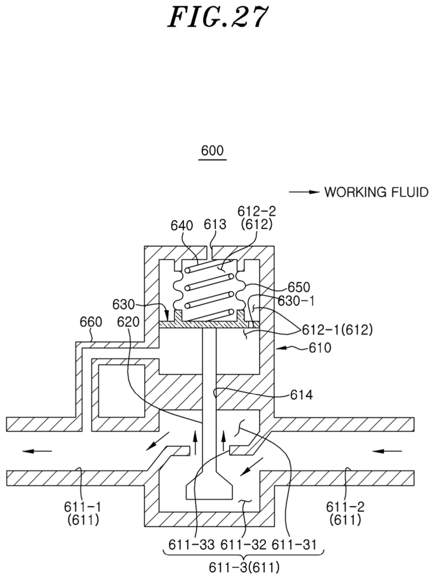

Hereinafter, with reference to FIG. 27, the sixth embodiment will be described. In describing the sixth embodiment of the present disclosure, when compared with the above-described embodiments, there is a difference in that the driving plate pressure balancing hole 630-1 is formed in the plunger movement driving plate 630, and such a difference will be mainly described, and the same descriptions and reference numerals as in the above-described embodiments are incorporated by reference.

With reference to FIG. 27, the driving plate pressure balancing hole 630-1 may be formed in the plunger movement driving plate 630. The driving plate pressure balancing hole 630-1 may communicate between a first pressure space 612-1 on one side of the plunger movement driving plate 630 and a first pressure space 612-1 on the other side of the plunger movement driving plate 630, or may communicate between a second pressure space 612-2 on one side of the plunger movement driving plate 630 and a second pressure space 612-2 on the other side of the plunger movement driving plate 630.

When the first pressure space 612-1 is the malfunction prevention space 612 outside the malfunction prevention bellows 650, and the second pressure space 612-2 is the malfunction prevention space 612 inside the malfunction prevention bellows 650, the driving plate pressure balancing hole 630-1 may communicate between the first pressure space 612-1 on one side of the plunger movement driving plate 630 and the first pressure space 612-1 on the other side of the plunger movement driving plate 630. The driving plate pressure balancing hole 630-1 may communicate between the first pressure space 612-1 on one side of the plunger movement driving plate 630 and the first pressure space 612-1 on the other side of the plunger movement driving plate 630, thereby allowing the plunger movement driving plate 630 to move easily in the malfunction prevention space 612. In addition, a pressure of the first pressure space 612-1 on one side of the plunger movement driving plate 630 and a pressure of the first pressure space 612-1 on the other side of the plunger movement driving plate 630 may become equal.

For example, the first pressure space 612-1 may include a first pressure space 612-1 above the plunger movement driving plate 630 and a first pressure space 612-1 below the plunger movement driving plate 630. In addition, the driving plate pressure balancing hole 630-1 may be connected to the first pressure space 612-1 above the plunger movement driving plate 630 and the first pressure space 612-1 below the plunger movement driving plate 630, thereby communicating between the first pressure space 612-1 above the plunger movement driving plate 630 and the first pressure space 612-1 below the plunger movement driving plate 630.

When the first pressure space 612-1 is the malfunction prevention space 612 inside the malfunction prevention bellows 650, and the second pressure space 612-2 is the malfunction prevention space 612 outside the malfunction prevention bellows 650, the driving plate pressure balancing hole 630-1 may communicate between the second pressure space 612-2 on one side of the plunger movement driving plate 630 and the second pressure space 612-2 on the other side of the plunger movement driving plate 630. The driving plate pressure balancing hole 630-1 may communicate the second pressure space 612-2 on one side of the plunger movement driving plate 630 with the second pressure space 612-2 on the other side of the plunger movement driving plate 630, thereby allowing the plunger movement driving plate 630 to move easily in the malfunction prevention space 612. In addition, a pressure of the second pressure space 612-2 on one side of the plunger movement driving plate 630 and a pressure of the second pressure space 612-2 on the other side of the plunger movement driving plate 630 may become equal.

For example, the second pressure space 612-2 may include a second pressure space 612-2 above the plunger movement driving plate 630 and a second pressure space 612-2 below the plunger movement driving plate 630. In addition, the driving plate pressure balancing hole 630-1 may be connected to the second pressure space 612-2 above the plunger movement driving plate 630 and the second pressure space 612-2 below the plunger movement driving plate 630, thereby communicating between the second pressure space 612-2 above the plunger movement driving plate 630 and the second pressure space 612-2 below the plunger movement driving plate 630.

Meanwhile, in addition to such configuration, according to a seventh embodiment of the present disclosure, a body pressure balancing flow path 615 may be formed in the malfunction prevention valve body 610.

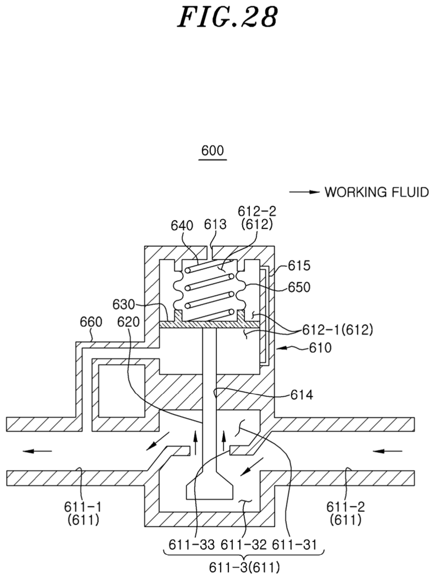

Hereinafter, with reference to FIG. 28, the seventh embodiment will be described. In describing the seventh embodiment of the present disclosure, when compared with the above-described embodiments, there is a different in that the body pressure balancing flow path 615 is formed in the malfunction prevention valve body 610, and such difference will be mainly described, and the same descriptions and reference numerals as in the above-described embodiments are incorporated by reference.

With reference to FIG. 28, the body pressure balancing flow path 615 may be formed in the malfunction prevention valve body 610. The body pressure balancing flow path 615 may communicate between the first pressure space 612-1 on one side of the plunger movement driving plate 630 and the first pressure space 612-1 on the other side of the plunger movement driving plate 630, or may communicate between the second pressure space 612-2 on one side of the plunger movement driving plate 630 and the second pressure space 612-2 on the other side of the plunger movement driving plate 630.

When the first pressure space 612-1 is the malfunction prevention space 612 outside the malfunction prevention bellows 650, and the second pressure space 612-2 is the malfunction prevention space 612 inside the malfunction prevention bellows 650, the body pressure balancing flow path 615 may communicate between the first pressure space 612-1 on one side of the plunger movement driving plate 630 and the first pressure space 612-1 on the other side of the plunger movement driving plate 630. The body pressure balancing flow path 615 may communicate between the first pressure space 612-1 on one side of the plunger movement driving plate 630 and the first pressure space 612-1 on the other side of the plunger movement driving plate 630, thereby allowing the plunger movement driving plate 630 to move easily in the malfunction prevention space 612. In addition, a pressure of the first pressure space 612-1 on one side of the plunger movement driving plate 630 and a pressure of the first pressure space 612-1 on the other side of the plunger movement driving plate 630 may become equal.

For example, the first pressure space 612-1 may include a first pressure space 612-1 above the plunger movement driving plate 630 and a first pressure space 612-1 below the plunger movement driving plate 630. In addition, the body pressure balancing flow path 615 may be connected to the first pressure space 612-1 above the plunger movement driving plate 630 and the first pressure space 612-1 below the plunger movement driving plate 630, thereby communicating between the first pressure space 612-1 above the plunger movement driving plate 630 and the first pressure space 612-1 below the plunger movement driving plate 630.

When the first pressure space 612-1 is the malfunction prevention space 612 inside the malfunction prevention bellows 650, and the second pressure space 612-2 is the malfunction prevention space 612 outside the malfunction prevention bellows 650, the body pressure balancing flow path 615 may communicate between the second pressure space 612-2 on one side of the plunger movement driving plate 630 and the second pressure space 612-2 on the other side of the plunger movement driving plate 630. The body pressure balancing flow path 615 may communicate between the second pressure space 612-2 on one side of the plunger movement driving plate 630 and the second pressure space 612-2 on the other side of the plunger movement driving plate 630, thereby allowing the plunger movement driving plate 630 to move easily in the malfunction prevention space 612. In addition, a pressure of the second pressure space 612-2 on one side of the plunger movement driving plate 630 and a pressure of the second pressure space 612-2 on the other side of the plunger movement driving plate 630 may become equal.

For example, the second pressure space 612-2 may include a second pressure space 612-2 above the plunger movement driving plate 630 and a second pressure space 612-2 below the plunger movement driving plate 630. In addition, the body pressure balancing flow path 615 may be connected to the second pressure space 612-2 above the plunger movement driving plate 630 and the second pressure space 612-2 below the plunger movement driving plate 630, thereby communicating between the second pressure space 612-2 above the plunger movement driving plate 630 and the second pressure space 612-2 below the plunger movement driving plate 630.

The examples of the present disclosure have been described above as specific embodiments, but these are only examples, and the present disclosure is not limited thereto, and should be construed as having the widest scope according to the technical spirit disclosed in the present specification. A person skilled in the art may combine/substitute the disclosed embodiments to implement a pattern of a shape that is not disclosed, but it also does not depart from the scope of the present disclosure. In addition, those skilled in the art can easily change or modify the disclosed embodiments based on the present specification, and it is clear that such changes or modifications also belong to the scope of the present disclosure

## Claims

1. A malfunction prevention valve, comprising:
a malfunction prevention valve body in which a malfunction prevention flow path is formed;
a malfunction prevention plunger movably disposed in the malfunction prevention valve body to open and close the malfunction prevention flow path;
a plunger movement driving plate movably disposed in the malfunction prevention valve body such that one surface of the plunger movement driving plate is connected to the malfunction prevention plunger; and
a malfunction prevention elastic member configured to provide an elastic force to the plunger movement driving plate in a direction in which the malfunction prevention plunger opens the malfunction prevention flow path,
wherein a force resulting from a difference in pressure between one side of the malfunction prevention flow path and an exterior is provided to the plunger movement driving plate in a direction in which the malfunction prevention plunger closes the malfunction prevention flow path.

2. The malfunction prevention valve of claim 1, wherein a malfunction prevention space in which at least a portion of the plunger movement driving plate and the malfunction prevention plunger are movably disposed, is formed in the malfunction prevention valve body, and
wherein the malfunction prevention space includes:
a first pressure space in communication with one side of the malfunction prevention flow path; and
a second pressure space in communication with the exterior.

3. The malfunction prevention valve of claim 2, wherein an external communication hole communicating between the exterior and the second pressure space, is formed in the malfunction prevention valve body, and
wherein when a volume of the second pressure space changes, fluid flows into or out of the second pressure space through the external communication hole.

4. The malfunction prevention valve of claim 2, wherein the malfunction prevention flow path includes:
a first connection flow path in communication with the first pressure space;
a second connection flow path; and
a malfunction prevention opening and closing space connected to the first connection flow path and the second connection flow path and in which at least a portion of the malfunction prevention plunger is movably disposed.

5. The malfunction prevention valve of claim 4, wherein the malfunction prevention opening and closing space includes:
a first opening and closing space connected to the first connection flow path;
a second opening and closing space connected to the second connection flow path; and
a malfunction prevention opening and closing hole in communication with the first opening and closing space and the second opening and closing space and being opened and closed by the malfunction prevention plunger.

6. The malfunction prevention valve of claim 5, further comprising:
a malfunction prevention bellows disposed in the malfunction prevention space to be connected to the malfunction prevention valve body and the other surface of the plunger movement driving plate, and configured to block communication between the first pressure space and the second pressure space; and
a malfunction prevention communication passage connected the first connection flow path and the first pressure space.

7. The malfunction prevention valve of claim 6, wherein a plunger through-hole is further formed in the malfunction prevention valve body, the plunger through-hole being connected to the malfunction prevention space and the malfunction prevention opening and closing space such that the malfunction prevention plunger movably passes therethrough.

8. The malfunction prevention valve of claim 7, wherein the first pressure space is the malfunction prevention space outside the malfunction prevention bellows,
the second pressure space is the malfunction prevention space inside the malfunction prevention bellows, and
the plunger through-hole is connected to the first pressure space.

9. The malfunction prevention valve of claim 8, wherein the malfunction prevention plunger passes through the malfunction prevention opening and closing hole to open and close the malfunction prevention opening and closing hole.

10. The malfunction prevention valve of claim 9, wherein the plunger through-hole is connected to the second opening and closing space, and
wherein the malfunction prevention valve further comprises:
a communication prevention bellows disposed in the first pressure space, so that the malfunction prevention plunger passes therethrough and is connected to one surface of the plunger movement driving plate and the malfunction prevention valve body, and configured to block communication between the first pressure space and the second opening and closing space.

11. The malfunction prevention valve of claim 9, wherein the plunger through-hole is connected to the first opening and closing space.

12. The malfunction prevention valve of claim 9, wherein the malfunction prevention elastic member is disposed in the second pressure space.

13. The malfunction prevention valve of claim 7, wherein the first pressure space is the malfunction prevention space inside the malfunction prevention bellows,
the second pressure space is the malfunction prevention space outside the malfunction prevention bellows, and
the plunger through-hole is connected to the second pressure space.

14. The malfunction prevention valve of claim 13, wherein the plunger through-hole is connected to the first opening and closing space, and
wherein the malfunction prevention valve further comprises:
a communication prevention bellows disposed in the second pressure space, so that the malfunction prevention plunger passes therethrough and is connected to one surface of the plunger movement driving plate and the malfunction prevention valve body, and configured to block communication between the second pressure space and the first opening and closing space.

15. The malfunction prevention valve of claim 13, wherein the malfunction prevention elastic member is disposed in the first pressure space.

16. The malfunction prevention valve of claim 13, wherein the malfunction prevention elastic member is disposed in the second pressure space.

17. The malfunction prevention valve of claim 4, wherein a first opening and closing flow path connected to the first connection flow path and being opened and closed by a portion of the malfunction prevention plunger, and
a second opening and closing flow path connected to the second connection flow path and being opened and closed by another portion of the malfunction prevention plunger, are formed in the malfunction prevention opening and closing space.

18. The malfunction prevention valve of claim 2, wherein a driving plate pressure balancing hole is formed in the plunger movement driving plate,
the driving plate pressure balancing hole communicating either:
the first pressure space on one side of the plunger movement driving plate and the first pressure space on the other side of the plunger movement driving plate; or
the second pressure space on one side of the plunger movement driving plate and the second pressure space on the other side of the plunger movement driving plate.

19. The malfunction prevention valve of claim 2, wherein a body pressure balancing flow path is formed in the malfunction prevention valve body,
the body pressure balancing flow path communicating either:
the first pressure space on one side of the plunger movement driving plate and the first pressure space on the other side of the plunger movement driving plate; or
the second pressure space on one side of the plunger movement driving plate and the second pressure space on the other side of the plunger movement driving plate.

20. A nuclear equipment, comprising:
a reactor;
a containment vessel in which the reactor is disposed;
a main valve disposed inside the containment vessel so as to be connected to an interior of the reactor, the main valve being configured to be opened and closed so that the interior of the reactor and an interior of the containment vessel are selectively in communication with each other, to be closed when a working fluid is supplied and to be opened when the working fluid is discharged;
a reset valve configured to open to allow the working fluid to be supplied to the main valve;
a trip valve configured to open to allow the working fluid to be discharged from the main valve;
a malfunction prevention valve configured such that, when the reset valve is opened, the working fluid is allowed to flow to the main valve, and when the trip valve is opened, the working fluid is allowed to be discharged from the main valve, and the main valve is not opened when the trip valve is opened while the reactor is in normal operation; and
a working fluid passage portion configured to provide a passage such that the working fluid flows between two or more of the main valve, the reset valve, the trip valve, or the malfunction prevention valve,
wherein the malfunction prevention valve is configured to be opened and closed according to a difference in pressure between the reactor and the interior of the containment vessel.

21. The nuclear equipment of claim 20, wherein the malfunction prevention valve comprises:
a malfunction prevention valve body in which a malfunction prevention flow path is formed, the malfunction prevention flow path having one side connected to the main valve and the other side to the reset valve and the trip valve;
a malfunction prevention plunger movably disposed in the malfunction prevention valve body to open and close the malfunction prevention flow path;
a plunger movement driving plate movably disposed in the malfunction prevention valve body such that one surface thereof is connected to the malfunction prevention plunger; and
a malfunction prevention elastic member configured to provide an elastic force to the plunger movement driving plate in a direction in which the malfunction prevention plunger opens the malfunction prevention flow path, and
wherein a force resulting from a difference in pressure between one side of the malfunction prevention flow path and an interior of the containment vessel is provided to the plunger movement driving plate in a direction in which the malfunction prevention plunger closes the malfunction prevention flow path.
